# EUROPÄISCHE PATENTSCHRIFT

(11) **EP 2 023 020 B1**
(45) Veröffentlichungstag und Bekanntmachung des Hinweises auf die Patenterteilung: **06.10.2010**
(21) Anmeldenummer: 08009372.7
(22) Anmeldetag: 21.05.2008
(51) Int. Cl.: F16H 61/32, F16H 59/04

(54) **Schaltgetriebe mit Schaltunterstützung und Ausfallsicherung**
Gearbox with switching support and outage protection
Engrenage doté d'une assistance à la commutation et d'une protection en cas de panne

(30) Priorität: 10.08.2007 DE 102007038046
(43) Veröffentlichungstag der Anmeldung: 11.02.2009
(73) Patentinhaber: GM Global Technology Operations, Inc., Detroit, MI 48265-3000 (US)
(72) Erfinder: Bönning, Jörg, 64285 Darmstadt (DE); Sporleder, Jan, 67657 Kaiserslautern (DE)
(74) Vertreter: Kraenzmer, Martin

(56) Entgegenhaltungen:
- EP-A- 0 790 442
- EP-A- 1 335 155
- EP-A- 1 437 533
- EP-A- 1 767 830
- FR-A- 1 014 878
- JP-A- 2 217 663

## Beschreibung

Die vorliegende Erfindung betrifft ein Schaltgetriebe mit automatischer Schaltunterstützung für ein Kraftfahrzeug.

Bei Kraftfahrzeugen mit einem gebräuchlichen mechanischen Schaltgetriebe ohne Schaltunterstützung muss ein Fahrer zum Einlegen des gewünschten Gangs am Schalt-Wählhebel eine gewisse Kraft aufwenden, um die Schaltbewegung und damit den Schaltvorgang durchzuführen. Insbesondere bei niedrigen Außentemperaturen ist die vom Fahrer aufzubringende Kraft höher als sonst, da dann die Getriebeschmierung sehr zähflüssig ist und die Getriebebauteile erhöhter Reibung unterliegen. Insbesondere ist dieses Problem bei Schaltbewegungen des Schalt-Wählhebels entlang von Schaltgassen einer Handschaltung mit H-förmig ausgelegter Schaltkulisse gegeben, wohingegen eine Bewegung des Schalt-Wählhebels entlang einer Wählgasse der Handschaltung weniger Kraft erfordert. Um einen besseren Bedienungskomfort hinsichtlich der Schaltbewegungen zu erreichen, gibt es mehrere Lösungsansätze.

Moderne Assisted Shift Systeme, bei denen das Schaltgetriebe mechanisch mit dem Schalt-Wählhebel gekoppelt ist, unterstützen den Schaltvorgang durch elektrische Aktuatoren, um die Kraft, die der Fahrer zum Schalten aufwenden muss, zu verringern. Dies verbessert grundsätzlich den Bedienungskomfort. Bei einem Ausfall des elektrischen Systems kann das Fahrzeug unter Aufwendung höherer Kraft manuell geschaltet werden.

In DE 10 2005 021 977 A1 ist, dem Oberbegriff entsprechend, eine Servo-Unterstützung für ein Handschaltgetriebe beschrieben. Hierbei unterstützt ein Elektromotor bei einer erfassten Bewegung des Schalt-Wählhebels den Schaltvorgang im Getriebe, so dass zusätzlich zu einer vom Fahrer aufgebrachten Kraft am Handschalthebel die Kraft der Servo-Unterstützung auf das Getriebe einwirkt, um den Schaltvorgang durchzuführen. Problematisch ist bei solchen Lösungen jedoch, dass aufgrund der mechanischen Kopplung zwischen Getriebe und Schalt-Wählhebel Vibrationen aus dem Getriebe auf den Schalthebel übertragen werden, welche vom Fahrer als unangenehm empfunden werden. Zudem werden durch die Vibrationen unangenehme Geräusche im Fahrzeuginneren hervorgerufen. Maßnahmen zur Dämpfung der Vibrationen erfordern zusätzlichen konstruktiven Aufwand und führen dennoch nicht zu optimalen Ergebnissen hinsichtlich des Fahrkomforts.

In modernen Shift-by-Wire Handschaltsystemen mit mechanischem Schaltgetriebe wird eine Betätigung eines Schalthebels durch den Fahrer mit Hilfe von an dem Schalthebel angebrachter Sensoren erfasst, und an dem Schaltgetriebe angeordnete elektrische Aktuatoren werden entsprechend der Betätigung angesteuert, um einen Schaltvorgang im Getriebe durchzuführen. Es genügt eine kleine Auslenkung des Schalthebels mit geringem Kraftaufwand, um den Schaltvorgang auszulösen. Da keine Kraft übertragende mechanische Verbindung mehr zwischen dem Getriebe und dem Schalthebel mehr besteht, werden keine Schwingungen des Getriebes mehr in die Fahrgastzelle übertragen. Jedoch kann es bei einem solchen Schaltsystem zu Ausfällen in der Elektronik kommen, so dass die Schaltvorgänge nicht mehr an das Getriebe übertragen werden können und somit das Fahrzeug nicht mehr fahrbar ist.

Den oben beschriebenen Lösungen gemeinsam ist darüber hinaus das Problem, dass die Servo-Unterstützung zwischen Getriebe und Schalt-Wählhebel aufwändig in das Schaltsystem integriert werden muss, so dass spezifische konstruktive Anpassungen notwendig sind.

Es ist daher die Aufgabe der vorliegenden Erfindung, ein Schaltgetriebe mit einer elektrisch gesteuerten Schaltunterstützung zu schaffen, welches eine genaue Steuerung der Schaltvorgänge gestattet, hohen Schalt- und Fahrkomfort gewährleistet und bei einem Ausfall der elektrischen Steuerung funktionsfähig bleibt, wobei das Getriebe leicht in ein bestehendes Kraftfahrzeug integrierbar ist.

Die Aufgabe wird gelöst, indem in einem Schaltgetriebe für ein Kraftfahrzeug, mit einer Antriebswelle und einer Abtriebswelle, die mit unterschiedlichen Übersetzungsverhältnissen aneinander koppelbar sind, einem Gehäuse und einer zum Wählen eines der Übersetzungsverhältnisse verstellbaren Schaltwelle, von der ein Ende aus dem Gehäuse herausgeführt ist und die wenigstens einen Schaltfinger zum Betätigen einer Koppeleinrichtung zum Koppeln von Antriebs- und Abtriebswelle trägt, mit einem Aktuator, welcher eingerichtet ist, die Schaltwelle zu verstellen, und mit einer Steuereinrichtung zum Antreiben des Aktuators die Schaltwelle in einen das herausgeführte Ende umfassenden äußeren Abschnitt und einen den Schaltfinger tragenden und durch den Aktuator antreibbaren inneren Abschnitt gegliedert ist, die über eine spielhaltige Übertragervorrichtung gegeneinander beweglich gekoppelt sind, wobei die Übertragervorrichtung einen Sensor zum Erfassen einer Auslenkung des äußeren Abschnitts gegenüber dem inneren Abschnitt umfasst und die Steuereinheit eingerichtet ist, den Aktuator in Abhängigkeit von der Auslenkung zu verstellen. Durch die Gliederung der Schaltwelle in zwei Abschnitte kann verhindert werden, dass Vibrationen, solange ihre Amplitude nicht das Spiel der spielhaltigen Übertragervorrichtung überschreitet, über den äußeren Abschnitt der Schaltwelle aus dem Getriebe heraus übertragen werden. Gleichzeitig kann bei elektronischen Schaltvorgängen durch die Kopplung der Abschnitte mittels der Übertragervorrichtung durch die gegeneinander beweglichen Teile der Übertragervorrichtung und die durch den Sensor detektierte Auslenkung der Teile zueinander eine auf das Getriebe einwirkende Schaltbewegung präzise nachgebildet und auf den Schaltfinger übertragen werden.

Die Übertragervorrichtung kann elastisch ausgebildet sein, um im Falle einer Auslenkung der gegeneinander beweglichen Teile aus einer Normalstellung eine Rückstellkraft zu erzeugen, die an einem in an sich bekannter Weise an den äußeren Abschnitt der Schaltwelle gekoppelten Schalt-Wählhebel für den Fahrer fühlbar ist.

Solange das elektrische System des Getriebes normal arbeitet, kommt keine feste mechanische Verbindung zwischen den gegeneinander beweglichen Teilen der Übertragervorrichtung zustande. Wenn während einer Funktionsstörung oder einem Ausfall des elektrischen Systems eine Schaltbewegung auf die Schaltwelle einwirkt, folgt das an den äußeren Abschnitt der Schaltwelle gekoppelte Teil der Übertragervorrichtung, aber das an den inneren Abschnitt der Schaltwelle gekoppelte Teil wird zunächst nicht nachgeführt. Erst wenn das an den äußeren Abschnitt der Schaltwelle gekoppelte Teil an das Ende seines Spiels stößt, entsteht eine kraftschlüssige Verbindung, die es erlaubt, die Schaltbewegung dennoch an den Schaltfinger zu übertragen. Somit kann die gewünschte Ausfallsicherheit gewährleistet werden und die Schaltung bleibt auch bei Störungen der elektronischen Steuerung schaltbar.

Das erfindungsgemäße Schaltgetriebe kann mit einer herkömmlichen, rein mechanischen äußeren Schaltung kombiniert werden, um die für Shift-by-Wire typischen Vorteile der Schwingungsentkopplung und der leichten Bedienbarkeit zu erreichen.

Wenn die Kopplungsvorrichtung in zwei Freiheitsgraden bewegbar ist, kann das Spiel auf einen der Freiheitsgrade, vorzugsweise denjenigen, der am stärksten an Schwingungen des Getriebes koppelt, beschränkt sein. Für den zweiten Freiheitsgrad kann eine Servounterstützung durch einen Aktuator entfallen, um die Kosten des Getriebes niedrig zu halten. In diesem Freiheitsgrad ist die Übertragervorrichtung dann zweckmäßigerweise spielfrei.

Zweckmäßig ist auch, wenn der äußere Abschnitt der Schaltwelle mit dem inneren Abschnitt in jedem spielhaltigen Freiheitsgrad elastisch hinsichtlich einer Bewegung der Abschnitte gegeneinander verbunden ist. Solange der Fahrer den Schalthebel nicht betätigt, ist die Übertragervorrichtung in einer Ruhestellung. Während der Fahrer den Schalthebel in Richtung eines Freiheitsgrades bewegt, ist die Übertragervorrichtung aus der Ruhestellung ausgelenkt, wobei das Maß der Auslenkung von der Geschwindigkeit der Hebelbewegung abhängt. Die elastische Verbindung erzeugt eine Gegenkraft, die der Fahrer spüren kann und die um so höher ist, je schneller der Fahrer den Hebel bewegt. Der Fahrer so zum einen die Illusion einer haptischen Rückkopplung vom Getriebe, zum anderen hat er auf diese Weise die Möglichkeit, schneller zu schalten als der Aktuator allein dies vermöchte; je schneller er schaltet, um so größer ist der Anteil an der Schaltarbeit, den er leisten muss.

Wenn die zwei Freiheitsgrade eine Translationsbewegung und eine Rotationsbewegung umfassen, kann die Kopplungsvorrichtung alle Bewegungen der Schaltwelle umfassen, welche zum Umsetzen eines Schaltvorgangs nötig sind.

Je nach Bauform des Getriebes ist es hierbei vorteilhaft, wenn der Aktuator eingerichtet ist, eine Rotationsbewegung der Schaltwelle zu unterstützen, oder wenn er eingerichtet ist, eine Translationsbewegung der Schaltwelle zu unterstützen.

Weitere Vorteile hinsichtlich der Verbesserung des Fahrkomforts bringt es, wenn der Aktuator ein Elektromotor ist, welcher einen Stator und einen Rotor umfasst, wobei der Stator ortsfest mit dem Gehäuse des Getriebes verbunden ist und der Rotor mit dem inneren Abschnitt der Schaltwelle wirkverbunden ist. Wenn der Rotor insbesondere drehfest mit dem inneren Abschnitt verbunden ist, kann der Elektromotor ohne zusätzliche koppelnde Bauteile optimal mit dem inneren Abschnitt der Schaltwelle verbunden werden. Durch die Masse des an der Schaltwelle angeordneten Rotors können Vibrationen aus dem Getriebe zusätzlich gedämpft werden.

In einer alternativen Ausgestaltung hierzu ist der Rotor mit dem inneren Abschnitt der Schaltwelle über ein Getriebe verbunden. Insbesondere ein Untersetzungsgetriebe ermöglicht eine exakte Steuerung kleiner Drehbewegungen des inneren Abschnitts durch den Motor.

Hinsichtlich der elektronisch gesteuerten Schaltvorgänge ist es zudem vorteilhaft, wenn die Steuereinrichtung einen PI-(Proportional-Integral)-Regler umfasst. Da ein solcher Regler es erlaubt, die Nachführgeschwindigkeit flexibel an Ausmaß und Dauer einer Abweichung anzupassen, kann die Steuerung des Aktuators besonders schnell und exakt durchgeführt werden. Der PI-Regler kann, wenn gewünscht, auch einen Zeitableitungsterm berücksichtigen, m.a.W. es kann sich auch um einen PID-Regler handeln.

Bezüglich des Schaltkomforts für einen Fahrer des Kraftfahrzeugs mit ergeben sich besondere Vorteile, wenn das Getriebe eine Kontur und eine gegen die Kontur beaufschlagte und bewegliche Spitze umfasst, wobei von Spitze und Kontur eines an dem Schaltgetriebe ortsfest und das andere mit dem äußeren Abschnitt der Schaltwelle gekoppelt beweglich ist. Die Kontur definiert stabile Positionen des äußeren Abschnitts der Schaltwelle. Diese Positionen bilden Stellungen eines Schalt-Wählhebels genau nach, z.B. in einer Wählgasse oder jeweils an den Enden von von der Wählgasse abzweigenden Schaltgassen.

Eine besonders günstige Bauform des Schaltgetriebes kann erreicht werden, wenn die Schaltwelle orthogonal zu Antriebs- und Abtriebswelle angeordnet ist. Insbesondere kann hierbei die Schaltwelle als Modul vorteilhaft in das Getriebe integriert werden.

In einer alternativen Ausgestaltung des erfindungsgemäßen Schaltgetriebes ist die Schaltwelle parallel zu Antriebs- und Abtriebswelle angeordnet. Hierbei können die Funktionen von Translations- und Rotationsbewegungen in der Übertragervorrichtung gegenüber der vorgenannten Ausgestaltung vertauscht sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Ansicht eines Schaltgetriebes für ein Kraftfahrzeug gemäß dem Stand der Technik;
- Fig. 2: eine schematische Darstellung eines Schaltsystems mit einem Schaltgetriebe aus Fig. 1;
- Fig. 3: eine schematische Darstellung eines Schaltsystems mit einem Schaltgetriebe gemäß der Erfindung in einer ersten Ausführungsform;
- Fig. 4: einen Längsschnitt durch eine in dem Schaltgetriebe integrierte Übertragervorrichtung;
- Fig. 5: einen schematischen Querschnitt durch die Übertragervorrichtung;
- Fig. 6: eine schematische Darstellung eines Schaltsystems mit einer weiteren Ausführungsform des Schaltgetriebes gemäß der Erfindung; und
- Fig. 7: einen schematischen Querschnitt durch einen äußeren Abschnitt einer Schaltwelle des Schaltgetriebes aus Fig. 6.

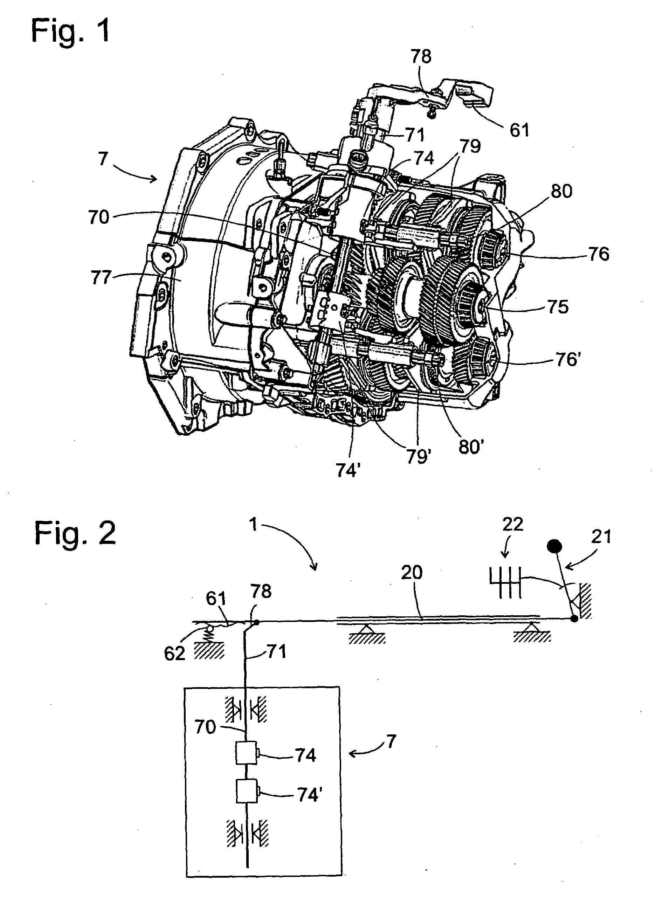

In Fig. 1 ist ein Schaltgetriebe für ein Kraftfahrzeug gemäß dem Stand der Technik dargestellt. Das Schaltgetriebe 7 umfasst eine Antriebswelle 75 und zwei Abtriebswellen 76, 76', welche zueinander parallel angeordnet sind und in üblicher Weise aneinander koppelbar sind, um in dem Schaltgetriebe 7 unterschiedliche Übersetzungsverhältnisse einzustellen.

Eine Schaltwelle 70 ist orthogonal zur Antriebswelle 75 und den Abtriebswellen 76, 76' angeordnet und trägt zwei Schaltfinger 74, 74': Die Schaltwelle ist entlang ihrer Achse verschiebbar; je nach Stellung, die sie einnimmt, koppelt einer der zwei Schaltfinger 74, 74' an Schaltklauen 79, 79', die auf zu den Wellen 75, 76, 76' parallelen Stangen 80, 80' verschiebbar sind, um mit Hilfe von in der Fig. nicht sichtbarer Sperrsynchronisiereinrichtungen verschiedene Zahnräder an die sie tragende Abtriebswelle 76, 76' drehfest zu koppeln und so ein Übersetzungsverhältnis des Getriebes einzustellen. Hierbei bewirkt eine axiale Verschiebung der Schaltwelle 70 ein Auswählen eines Übersetzungsverhältnisses und eine radiale Verdrehung der Schaltwelle 70 ein Koppeln des Übersetzungsverhältnisses durch die Schaltfinger 74, 74'.

Das Schaltgetriebe 7 ist von einem Gehäuse 77 umschlossen. Ein äußerer Abschnitt 71 der Schaltwelle 70 ist aus dem Gehäuse 77 herausgeführt. Am Ende des äußeren Abschnitts 71 ist ein von der Schaltwelle 70 abgewinkelt abstehendes, hebelförmiges Betätigungsglied 78 angeordnet, welches sich auf einer dem Getriebe 7 abgewandten Ende in einer Kontur 61 fortsetzt, die ein dem Getriebe 7 zugewandtes mehrfach abgestuftes flächiges Profil besitzt.

Fig. 2 zeigt eine schematische Darstellung eines Schaltsystems 1 für ein Kraftfahrzeug mit einem Schaltgetriebe 7 gemäß dem Stand der Technik, wie in Fig. 1 gezeigt.

Das Schaltsystem 1 umfasst einen Schalt-Wählhebel 21 und eine Schaltkulisse 22 mit sich H-förmig kreuzenden Schalt- und Wählgassen, durch die sich der Schalt-Wählhebel 21 erstreckt und die Bewegungen des Schalt-Wählhebels 21 führen. Die Fig. 2 zeigt einen Seilzug 20, der den Schalt-Wählhebel 21 mit dem Betätigungsglied 78 des Schaltgetriebes 7 verbindet. Entsprechend der Zahl der Freiheitsgrade des Schalt-Wählhebels 21 können mehrere solche Seilzüge 20 vorgesehen sein, von denen jeder die Bewegung des Schalt-Wählhebels 21 in einem Freiheitsgrad überträgt. In einer alternativen Ausgestaltung kann der eine oder andere der Seilzüge durch eine Stange ersetzt sein. Die Anbindung des Betätigungsglieds 78 an die Schaltwelle 70 ist so gewählt, dass eine Bewegung des Schalt-Wählhebels 21 entlang der Wählgasse als Verschiebung der Schaltwelle 70 in axialer Richtung umgesetzt wird, und eine Bewegung des Schalt-Wählhebels 21 entlang einer Schaltgasse in einer Verdrehung der Schaltwelle 70 resultiert.

An einem oberen Ende des Getriebegehäuses 77 ist eine Spitze 62 über einen Federmechanismus beweglich fixiert, welche mit der an dem Betätigungsglied 78 angeordneten Kontur 61 zusammenwirkt. Aus dem Zusammenwirken von Spitze 62 und Kontur 61 ergeben sich stabile Stellungen des Schalt-Wählhebels 21 jeweils in der Wählgasse und an den Enden der Schaltgassen, die für den Fahrer erfühlbar sind und ihm während des Schaltens eine Rückmeldung über die jeweils erreichte Position des Schalt-Wählhebels 21 liefern.

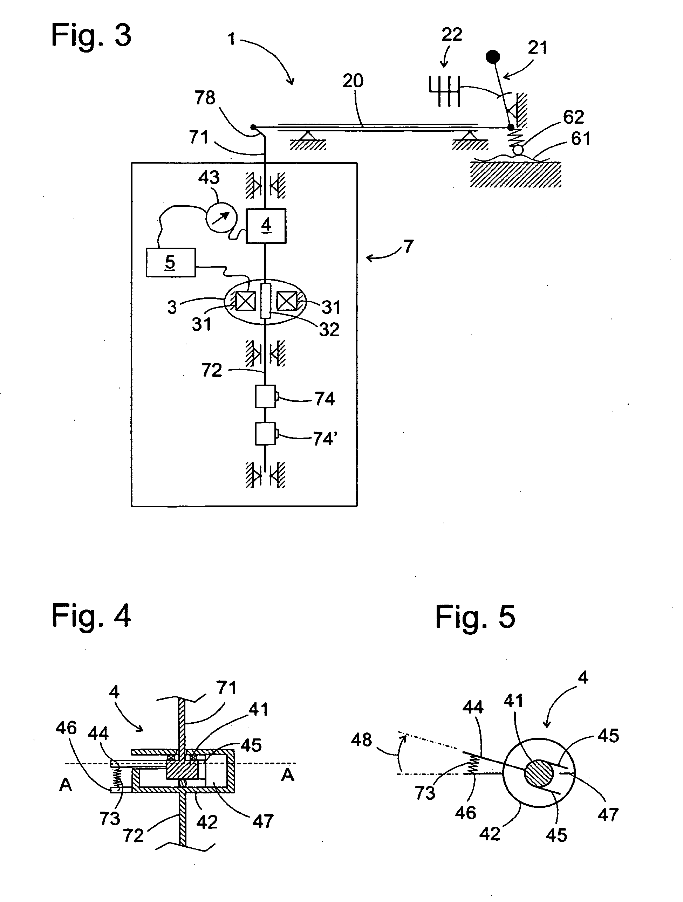

Fig. 3 zeigt nun eine schematische Darstellung eines Schaltsystems 1 mit einem Schaltgetriebe 7 in einer ersten Ausführungsform.

Wie in der Darstellung von Fig. 2 umfasst das Schaltsystem 1 einen Schalt-Wählhebel 21 und eine Schaltkulisse 22 mit sich H-förmig kreuzenden Schalt- und Wählgassen. Hierbei ist die Spitze 62 an einem unteren Ende des Schalt-Wählhebels 21 über einen Federmechanismus beweglich gehalten, welcher mit der in einem Schaltgehäuse fest montierten Kontur 61 zusammenwirkt.

Das Schaltgetriebe 7 im Schaltsystem 1 besitzt eine in zwei Abschnitte 71, 72 gegliederte Schaltwelle. Der äußere Abschnitt 71 ist aus dem Gehäuse (nicht dargestellt) des Schaltgetriebes 7 herausgeführt und über das Betätigungsglied 78 durch den Seilzug 20 mit dem Schalt-Wählhebel 21 verbunden. Mit dem inneren Abschnitt 72 der Schaltwelle ist der äußere Abschnitt 71 durch eine Übertragervorrichtung 4 beweglich verbunden.

Am inneren Abschnitt 72 ist als Aktuator 3 ein elektrisch angetriebener Motor angeordnet, welcher einen Stator 31 und einen Rotor 32 umfasst. Hierbei ist der Stator 31 ortsfest mit dem Gehäuse des Getriebes 7 verbunden und der Rotor 32 ist drehfest mit dem inneren Abschnitt 72 der Schaltwelle verbunden. Weiter sind am inneren Abschnitt 72 der Schaltwelle mehrere Schaltfinger 74, 74' angeordnet. Indem der Motor den inneren Abschnitt 72 dreht, stößt jeweils einer der Schaltfinger 74, 74' gegen eine der auf den Stangen 80 verschiebbaren Schaltklauen 79, 79', verschiebt diese und schaltet so ein Übersetzungsverhältnis im Getriebe 7.

In einer alternativen Ausgestaltung kann der Rotor 32 durch ein Getriebe (nicht dargestellt) mit dem inneren Abschnitt 72 der Schaltwelle verbunden sein, so dass eine Drehung des Motors mittels einer Übersetzung auf den inneren Abschnitt 72 übertragen wird.

Die Übertragervorrichtung 4 umfasst einen Sensor 43, welcher eine Verdrehung der Abschnitt 71, 72 der Schaltwelle gegeneinander detektiert. Eine Steuereinheit 5 des Getriebes 7 ist über einen Eingang an den Sensor 43 angeschlossen, um ein für das Ausmaß der Verdrehung repräsentatives Messsignal zu empfangen und ist über einen Ausgang mit dem Aktuator 3 verbunden, um an diesen einen von dem Messsignal abgeleiteten Stellbefehl zu übertragen.

Die Darstellungen in Fig. 4 und Fig. 5 zeigen Details zum Aufbau der Übertragervorrichtung 4. In Fig. 4 ist ein Schnitt durch die Übertragervorrichtung 4 entlang einer Längsachse der in die Abschnitte 71, 72 unterteilten Schaltwelle dargestellt.

Die Übertragervorrichtung 4 umfasst zwei gegeneinander um die Längsachse drehbewegliche Teile 41, 42. Das erste Teil 41 ist fest mit dem äußeren Abschnitt 71 der Schaltwelle und das zweite Teil 42 ist fest mit dem inneren Abschnitt 72 der Schaltwelle verbunden.

Das erste Teil 41 besitzt eine im Wesentlichen zylindrische Grundform, wobei die Längsachse der Schaltwelle auch die Zylinderachse bildet. An einer Seite des Zylinders steht ein Finger 44 radial ab. Auf der vom Finger 44 abgewandten Seite des Zylinders sind zwei zueinander parallel angeordnete Rippen 45 angeformt.

Das zweite Teil 42 ist ein Hohlkörper, der den zylindrischen Grundkörper des ersten Teils 41 und die Rippen 45 aufnimmt. Der Finger 44 ist aus einem Schlitz des Hohlkörpers herausgeführt. Ein zweiter Finger 46 steht benachbart zu dem Finger 44 von dem Hohlkörper ab. Zwischen beiden ist als elastisches Element eine Feder 73 gespannt. An einer von dem Finger 46 abgewandten Seite des Hohlkörpers ist eine in dessen inneren Hohlraum hineinragende und zwischen die Rippen 45 eingreifende Rippe 47 angeformt.

In Fig. 5 ist ein schematischer Querschnitt der Übertragervorrichtung 4 entlang einer Linie A-A aus Fig. 4 dargestellt, wobei die Teile 41, 42 aus einer Ruhestellung, in der die Finger 44, 46 miteinander fluchten, um einen Winkel 48 ausgelenkt sind und durch die Auslenkung die Feder 73 gespannt ist. Die Drehbewegungsfreiheit der Teile 41, 42 gegeneinander ist durch den Eingriff der Rippe 47 zwischen die Rippen 45 begrenzt. Ein axiales Spiel der Teile 41, 42 gegeneinander ist vernachlässigbar. Der Sensor 43 zum erfassen der Auslenkung 48 kann z.B. ein kapazitiver Sensor mit zwei Sensoren sein, die die Rippe 47 als eine gemeinsame erste Platte und jeweils eine der Rippen 45 als zweite Platte haben. Die Kapazitätsdifferenz zwischen den Kondensatoren ist ein Maß für die Auslenkung 48.

Als elastisches Element könnte anstelle der Feder 73 oder ergänzend zu dieser ein elastischen Puffer zwischen der Rippe 47 und den benachbarten Rippen 45 angeordnet sein, der im Falle einer Auslenkung der Teile 41, 42 gegeneinander verformt wird. Alternativ oder ergänzend könnten die Teile 71, 72 auch durch einen sich in Längsrichtung der Schaltwelle 70 erstreckenden Torsionsstab als elastisches Element verbunden sein. Im einen wie im anderen Falle spürt ein Fahrer die vom elastischen Element erzeugte Rückstellkraft, sie gibt ihm Aufschluss darüber, wie weit die vom Motor 3 angetriebene Bewegung des Teils 42 hinter der des Teils 41 hinterher hinkt.

Wählt nun der Fahrer in einem elektronisch gesteuerten Schaltbetrieb durch eine Bewegung des Schalt-Wählhebels 21 einen bestimmten Gang aus, so wird diese Bewegung über den Seilzug 20 an den äußeren Abschnitt 71 der Schaltwelle und somit an das erste Teil 41 der Übertragervorrichtung 4 übertragen. Die daraus resultierende Auslenkung 48 wird von dem Sensor 43 quantitativ erfasst und an die Steuereinheit 5 übertragen. Ein PID-Regler (nicht dargestellt) der Steuereinheit 5 ermittelt eine Abweichung dieser Auslenkung 44 von einem Sollwert (der z.B. einer mittigen Stellung der Rippe 47 zwischen den beiden Rippen 45 entspricht) und bestimmt daraus eine Geschwindigkeit und Richtung und überträgt diese als Stellgröße an den Motor 3. Der Motor 3 bewirkt über eine Drehbewegung des inneren Abschnitts 72 der Schaltwelle eine Bewegung der Schaltfinger 74, 74', welche die Bewegung des Schalt-Wählhebels 21 exakt nachbildet, so dass die Schaltfinger 74, 74' im Getriebe 7 das Einlegen des gewünschten Ganges bewirken. Gleichzeitig wird durch die Drehbewegung des inneren Abschnitts 72 der Schaltwelle wieder eine Annäherung der Auslenkung 48 der Teile 41, 42 gegeneinander an den Sollwert bewirkt.

Wenn der Fahrer den Schalt-Wählhebel nicht so schnell bewegt, dass der Motor 3 nicht zu folgen vermag, kommt es unter normalen Betriebsbedingungen nicht zum Kontakt der Rippen 45 und 47. So können Drehschwingungen nicht vom inneren Abschnitt 72 der Schaltwelle auf den äußeren Abschnitt 71 und über diesen an den Schalt-Wählhebel 21 übertragen werden.

Im elektrischen Teil des Schaltsystems 1 können Störungen auftreten. Diese können durch einen kompletten Stromausfall bedingt sein oder dadurch, dass die elektronische Regelung durch die Steuereinheit 5 zusammen mit dem Motor 3 nicht rasch genug auf Schaltbewegungen reagiert. In solchen Fällen wird die Auslenkung der Teile 41, 42 gegeneinander so groß, dass sie fest gegeneinander drücken und die zum Antreiben der Bewegung der Schaltfinger 74, 74' erforderliche Kraft vom Fahrer aufgebracht und über den Seilzug 20 über die Übertragervorrichtung 4 hinweg auf die Schaltfinger 74, 74' ausgeübt wird.

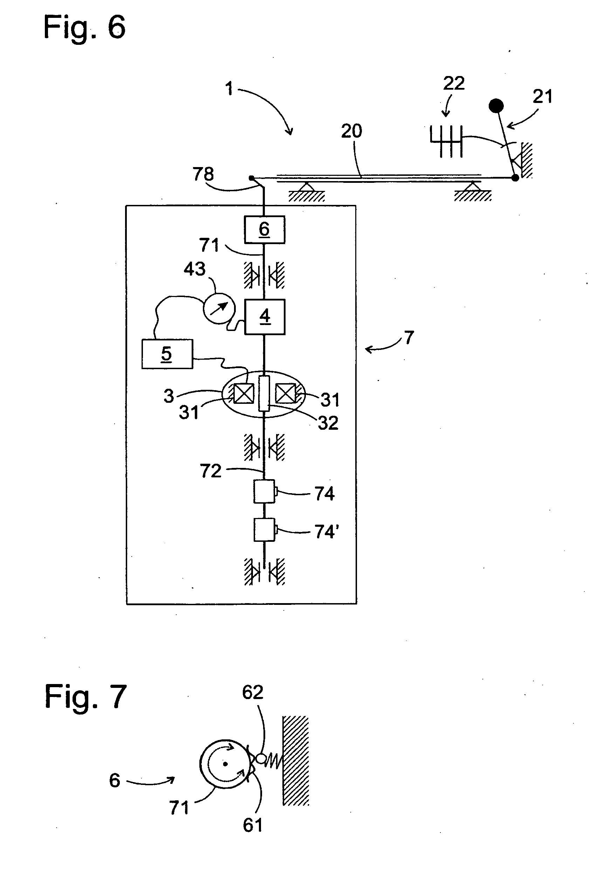

In Fig. 6 ist eine Variante des Schaltsystems 1 aus Fig. 3 schematisch dargestellt, bei welcher eine Vorrichtung 6, welche die Kontur 61 und die Spitze 62 umfasst, nicht im Bereich des Schalt-Wählhebels 21 angeordnet sind, sondern in das Getriebe 7 integriert ist.

Fig. 7 zeigt hierzu einen Querschnitt quer zur Achse des äußeren Abschnitts 71 der Schaltwelle durch die Vorrichtung 6. Die Kontur 61 ist mit dem äußeren Abschnitt 71 der Schaltwelle fest verbunden und umschließt diese auf einem Teil ihres Umfangs. Die Spitze 62 ist über einen Federmechanismus beweglich mit dem Gehäuse des Getriebes 7 verbunden. Die Bewegungen des äußeren Abschnitts 71 der Schaltwelle werden so über die Spitze 62 an der darunter gelagerten Kontur 61 abgegriffen. Der Fahrer kann zwar bei dieser Anordnung durch das Ineinandergreifen von Kontur 61 und Spitze 62 definierte Rastpositionen nicht ganz zu exakt erfühlen wie wenn Kontur 61 und Spitze 62 unmittelbar am Schalt-Wählhebel 21 angeordnet sind, im Gegenzug ergibt sich jedoch der Vorteil, dass eine Justierung der Positionen von Kontur 61 und Spitze 62, die erforderlich sein kann, damit deren Raststellungen exakt mit den Gängen des Getriebes übereinstimmen, bereits bei der Fertigung des Getriebes vorgenommen werden kann. Dadurch vereinfacht sich der Einbau des Getriebes in ein Kraftfahrzeug.

Die Darstellungen in Fig. 3 und Fig. 6 zeigen eine Ausgestaltung, in welcher die Kontur 61 ortsfest verbunden und die Spitze 62 beweglich ist, dies kann in einer alternativen Ausgestaltung auch umgekehrt sein.

In einer zu den bisher beschriebenen Ausführungsformen alternativen Bauform des Getriebes 7 ist die Schaltwelle 71, 72 parallel zur Antriebswelle 75 und einer oder mehreren Abtriebswellen 76, 76' angeordnet. Hierbei wird eine Bewegung des Schalt-Wählhebels 21 entlang der Wählgasse als Drehbewegung auf den äußeren Abschnitt 71 der Schaltwelle und eine Bewegung des Schalt-Wählhebels 21 entlang einer der Schaltgassen als axiale Verschiebung auf den äußeren Abschnitt 71 der Schaltwelle umgesetzt.

Die Übertragervorrichtung 4 ist in diesem Fall in axialer Richtung spielhaltig, der Sensor ist ausgelegt, um eine Auslenkung der Teile 41, 42 gegeneinander in axialer Richtung zu detektieren, und der Aktuator 3 führt den inneren Abschnitt 72 der Schaltwelle gemäß der vom Sensor erfassten Auslenkung in axialer Richtung nach, um den Schaltvorgang umzusetzen.

### Bezugszeichenliste

Schaltsystem 1
Seilzug 20
Schalt-Wählhebel 21
Schalt-Kulisse 22
Aktuator 3
Stator 31
Rotor 32
Übertragervorrichtung 4
an äußeren Abschnitt der Schaltwelle gekoppeltes Teil 41
an inneren Abschnitt der Schaltwelle gekoppeltes Teil 42 Sensor 43
Finger (am Teil 41) 44
Rippen (am Teil 41) 45
Finger (am Teil 42) 46
Rippe (am Teil 42) 47
Auslenkung 48
Steuereinrichtung 5
Kontur 61
bewegliche Spitze 62
Getriebe 7
Schaltwelle 70, 71, 72
Elastische Verbindung 73
Schaltfinger 74, 74'
Antriebswelle 75
Abtriebswellen 76, 76'
Gehäuse 77
Betätigungsglied 78
Schaltklaue 79, 79'
Stange 80

## Patentansprüche

1. Schaltgetriebe (7) für ein Kraftfahrzeug, mit einer Antriebswelle (75) und einer Abtriebswelle (76, 76'), die mit unterschiedlichen Übersetzungsverhältnissen aneinander koppelbar sind, einem Gehäuse (77) und einer zum Wählen eines der Übersetzungsverhältnisse verstellbaren Schaltwelle (70, 71, 72), von der ein Ende aus dem Gehäuse (77) herausgeführt ist und die wenigstens einen Schaltfinger (74, 74') zum Betätigen einer Koppeleinrichtung zum Koppeln von Antriebs- (75) und Abtriebswelle (76, 76') trägt, mit einem Aktuator (3), welcher eingerichtet ist, die Schaltwelle (70) zu verstellen, und mit einer Steuereinrichtung (5) zum Antreiben des Aktuators (3), **dadurch gekennzeichnet, dass** die Schaltwelle (70) in einen das herausgeführte Ende umfassenden äußeren Abschnitt (71) und einen den Schaltfinger (74, 74') tragenden und durch den Aktuator (3) antreibbaren inneren Abschnitt (72) gegliedert ist, die über eine spielhaltige Übertragervorrichtung (4) gegeneinander beweglich gekoppelt sind, wobei die Übertragervorrichtung (4) einen Sensor (43) zum Erfassen einer Auslenkung (48) des äußeren Abschnitts (71) gegenüber dem inneren Abschnitt (72) umfasst und die Steuereinheit (5) eingerichtet ist, den Aktuator (3) in Abhängigkeit von der Auslenkung (48) zu verstellen.

2. Schaltgetriebe nach Anspruch 1, **dadurch gekennzeichnet, dass** die Übertragervorrichtung (4) elastisch ausgebildet ist.

3. Schaltgetriebe nach Anspruch 1 oder 2, **dadurch gekennzeichnet, dass** die Übertragervorrichtung (4) in zwei Freiheitsgraden beweglich aber nur in einem Freiheitsgrad spielhaltig ist.

4. Schaltgetriebe nach einem der vorhergehenden Ansprüche, **dadurch gekennzeichnet, dass** der äußere Abschnitt (71) mit dem inneren Abschnitt (72) der Schaltwelle (70) in jedem spielhaltigen Freiheitsgrad elastisch hinsichtlich einer Bewegung der Abschnitte (71, 72) gegeneinander verbunden ist.

5. Schaltgetriebe nach Anspruch 3 oder 4, **dadurch gekennzeichnet, dass** die zwei Freiheitsgrade eine Translationsbewegung und eine Rotationsbewegung umfassen.

6. Schaltgetriebe nach Anspruch 5, **dadurch gekennzeichnet, dass** der Aktuator (3) eingerichtet ist, eine Rotationsbewegung der Schaltwelle zu unterstützen.

7. Schaltgetriebe nach Anspruch 5, **dadurch gekennzeichnet, dass** der Aktuator (3) eingerichtet ist, eine Translationsbewegung der Schaltwelle zu unterstützen.

8. Schaltgetriebe nach Anspruch 6, **dadurch gekennzeichnet, dass** der Aktuator (3) ein Elektromotor ist, welcher einen Stator (31) und einen Rotor (32) umfasst, wobei der Stator (31) ortsfest mit dem Gehäuse des Getriebes (7) verbunden ist und der Rotor (32) mit dem inneren Abschnitt (72) der Schaltwelle (70) wirkverbunden ist.

9. Schaltgetriebe nach Anspruch 8, **dadurch gekennzeichnet, dass** der Rotor (32) mit dem inneren Abschnitt (72) der Schaltwelle (70) über ein Getriebe verbunden ist.

10. Schaltgetriebe nach einem der vorhergehenden Ansprüche, **dadurch gekennzeichnet, dass** die Steuereinrichtung (5) einen PI-Regler umfasst.

11. Schaltgetriebe nach einem der vorhergehenden Ansprüche, **dadurch gekennzeichnet, dass** es eine Kontur (61) und eine gegen die Kontur (61) beaufschlagte und bewegliche Spitze (62) umfasst, wobei von Spitze (62) und Kontur (61) eines an dem Schaltgetriebe ortsfest und das andere mit dem äußeren Abschnitt (71) der Schaltwelle (70) gekoppelt beweglich ist.

12. Schaltgetriebe nach einem der vorhergehenden Ansprüche, **dadurch gekennzeichnet, dass** die Schaltwelle (71, 72) orthogonal zu Antriebs- und Abtriebswelle angeordnet ist.

13. Schaltgetriebe nach einem der Ansprüche 1 bis 11, **dadurch gekennzeichnet, dass** die Schaltwelle (71, 72) parallel zu Antriebs- und Abtriebswelle angeordnet ist.

## Claims

1. A gearbox (7) for a motor vehicle, comprising a driving shaft (75) and a driven shaft (76, 76') which can be coupled with one another with different gear ratios, a housing (77) and a third motion shaft (70, 71, 72) adjustable for choosing one of the gear ratios, of which one end is led out of the housing (77) and carries at least one shift finger (74, 74') for actuating a coupling device for coupling driving (75) and driven shaft (76, 76'), an actuator (3) which is set up to adjust the third motion shaft (70), and a control device (5) for driving the actuator (3), **characterized in that** the third motion shaft (70) is divided into an outer section (71) comprising the end that has been led out and an inner section (72) which carries the shift finger (74, 74') and is drivable by the actuator (3), which sections are movable coupled against one another via a play-containing transfer apparatus (4), with the transfer apparatus (4) comprising a sensor (43) for detecting a deflection (48) of the outer section (71) relative to the inner section (72), and the control unit (5) is set up to adjust the actuator (3) depending on the deflection (48).

2. A gearbox according to claim 1, **characterized in that** the transfer apparatus (4) is arranged in an elastic manner.

3. A gearbox according to claim 1 or 2, **characterized in that** the transfer apparatus (4) is movable in two degrees of freedom, but contains play only in one degree of freedom.

4. A gearbox according to one of the preceding claims, **characterized in that** the outer section (71) is connected with the inner section (72) of the third motion shaft (70) in an elastic manner in each play-containing degree of freedom with respect to a movement of the sections (71, 72) against one another.

5. A gearbox according to claim 3 or 4, **characterized in that** the two degrees of freedom comprise a translational movement and a rotary movement.

6. A gearbox according to claim 5, **characterized in that** the actuator (3) is set up to support a rotary movement of the third motion shaft.

7. A gearbox according to claim 5, **characterized in that** the actuator (3) is set up to support a translational movement of the third motion shaft.

8. A gearbox according to claim 6, **characterized in that** the actuator (3) is an electromotor which comprises a stator (31) and a rotor (32), with the stator (31) being connected in a stationary manner with the housing of the transmission (7) and the rotor (32) is operatively connected with the inner section (72) of the third motion shaft.

9. A gearbox according to claim 8, **characterized in that** the rotor (32) is connected with the inner section (72) of the third motion shaft (70) via a transmission.

10. A gearbox according to one of the preceding claims, **characterized in that** the control device (5) comprises a PI controller.

11. A gearbox according to one of the preceding claims, **characterized in that** it comprises a contour (61) and a tip (62) which is movable and pressed against the contour (61), and, in respect of tip (62) and contour (61), one being coupled in a stationary manner on the gearbox and the other being coupled to be movable with the outer section (71) of the third motion shaft (70).

12. A gearbox according to one of the preceding claims, **characterized in that** the third motion shaft (71, 72) is arranged orthogonally in relation to driving and driven shaft.

13. A gearbox according to one of the claims 1 to 11, **characterized in that** the third motion shaft (71, 72) is arranged parallel to the driving and driven shaft.

## Revendications

1. Boîte de vitesses (7) pour un véhicule à moteur, avec un arbre d'entraînement (75) et un arbre de sortie (76, 76') qui peuvent être couplés l'un à l'autre selon différents rapports de multiplication, un carter (77) et un axe de levier de changement de vitesses (70, 71, 72) pouvant être déplacé pour choisir l'un des rapports de multiplication, dont une extrémité sort du carter (77) et qui porte au moins une patte de changement de vitesses (74, 74') pour actionner un dispositif de couplage pour coupler les arbres d'entraînement (75) et de sortie (76, 76'), avec un actionneur (3) conçu pour déplacer l'axe de levier de changement de vitesses (70) et avec un dispositif de commande (5) pour entraîner l'actionneur (3), **caractérisée en ce que** l'axe de levier de changement de vitesses (70) est partagé en une partie extérieure (71) comprenant la partie qui sort du carter et une partie intérieure (72) portant la patte de changement de vitesses (74, 74') et pouvant être entraînée par l'actionneur (3), qui sont couplées l'une à l'autre de façon mobile par un dispositif de transmission ayant un jeu (4), le dispositif de transmission (4) comprenant un capteur (43) pour capter une déviation (48) de la partie extérieure (71) par rapport à la partie intérieure (72) et l'unité de commande (5) étant conçue pour déplacer l'actionneur (3) en fonction de la déviation (48).

2. Boîte de vitesses selon la revendication 1, **caractérisée en ce que** le dispositif de transmission (4) est élastique.

3. Boîte de vitesses selon la revendication 1 ou 2, **caractérisée en ce que** le dispositif de transmission (4) est mobile selon deux degrés de liberté mais n'a du jeu que selon un degré de liberté.

4. Boîte de vitesses selon l'une des revendications précédentes, **caractérisée en ce que** la partie extérieure (71) est reliée à la partie intérieure (72) de l'axe de levier de changement de vitesses (70) de façon élastique selon chaque degré de liberté en vue d'un mouvement des parties (71, 72) l'une par rapport à l'autre.

5. Boîte de vitesses selon la revendication 3 ou 4, **caractérisée en ce que** les deux degrés de liberté comprennent un mouvement de translation et un mouvement de rotation.

6. Boîte de vitesses selon la revendication 5, **caractérisée en ce que** l'actionneur (3) est conçu pour favoriser un mouvement de rotation de l'axe de levier de changement de vitesses.

7. Boîte de vitesses selon la revendication 5, **caractérisée en ce que** l'actionneur (3) est conçu pour favoriser un mouvement de translation de l'axe de levier de changement de vitesses.

8. Boîte de vitesses selon la revendication 6, **caractérisée en ce que** l'actionneur (3) est un moteur électrique qui comprend un stator (31) et un rotor (32), le stator (31) étant relié de façon stationnaire au carter de la boîte (7) et le rotor (32) étant en liaison active avec la partie intérieure (72) de l'axe de levier de changement de vitesses (70).

9. Boîte de vitesses selon la revendication 8, **caractérisée en ce que** le rotor (32) est relié à la partie intérieure (72) de l'axe de levier de changement de vitesses (70) par un engrenage.

10. Boîte de vitesses selon l'une des revendications précédentes, **caractérisée en ce que** le dispositif de commande (5) est un régulateur PI.

11. Boîte de vitesses selon l'une des revendications précédentes, **caractérisée en ce qu'**elle présente un contour (61) et une pointe (62) mobile contrainte en direction du contour (61), l'un parmi la pointe (62) et le contour (61) étant stationnaire sur la boîte de vitesses et l'autre étant mobile en étant couplé à la partie extérieure (71) de l'axe de levier de changement de vitesses (70).

12. Boîte de vitesses selon l'une des revendications précédentes, **caractérisée en ce que** l'axe de levier de changement de vitesses (71, 72) est disposé perpendiculairement aux arbres d'entraînement et de sortie.

13. Boîte de vitesses selon l'une des revendications 1 à 11, **caractérisée en ce que** l'axe de levier de changement de vitesses (71, 72) est disposé parallèlement aux arbres d'entraînement et de sortie.
